# EUROPEAN PATENT APPLICATION

(11) **EP 4 800 072 A1**
(43) Date of publication of application: **02.09.2026**
(21) Application number: 25160376.7
(22) Date of filing: 26.02.2025
(51) Int. Cl.: C08L 69/00

(54) **FLAME RETARDANT BRANCHED POLYCARBONATE COMPOSITIONS**

(71) Applicant: SHPP Global Technologies B.V., 4612 PX Bergen op Zoom (NL)
(72) Inventor: SHAN, Wei, Shanghai, 201319 (CN); CHEN, Keran, Shanghai, 201319 (CN); GAO, Rui, Shanghai, 201319 (CN)
(74) Representative: Balder IP Law, S.L.

(57) **Abstract**

A polycarbonate composition including 10-50 wt% of a linear polycarbonate, a branched polycarbonate endcapped with p-cumyl phenol, or a combination thereof; 5-20 wt% of a polycarbonate-siloxane copolymer having a siloxane content of 30-70 wt%, present in an amount effective to provide 3-14 wt% siloxane repeating units based on the total weight of the composition; 40-60 wt% of a highly branched polycarbonate endcapped with 4-hydroxybenzonitrile; 0.5-15 wt% of a non-fluorinated phosphorus-containing flame retardant; 0.1-5 wt% of a silicone fluid having dissolved therein a silicone resin; optionally, a colorant composition optionally comprising 0.1-10 wt% of TiO₂; optionally, an additive composition; and optionally, 5-25 wt% of glass fibers; each based on the total weight of the polycarbonate composition, which totals 100 wt%; and wherein the polycarbonate composition comprises fluorinated compounds in an amount effective to provide 1500 ppm or less fluorine to the total composition; and wherein a molded sample of the polycarbonate composition has a UL-94 rating of 5V at a thickness of 3.0 millimeters

## Description

### BACKGROUND

This disclosure relates to polycarbonate compositions, and in particular to flame-retardant polycarbonate compositions including branched polycarbonates, methods of their manufacture, and uses thereof in thin-wall articles.

Polycarbonates therefore have utility as materials for a wide range of applications, from automotive parts to electric and electronic appliances. Because of their wide use, particularly in electronic applications, it is desirable for the polycarbonate compositions to have flame retardancy. Such properties can be particularly difficult to achieve in thin-wall applications In addition, more stringent regulations are being put in place to reduce or eliminate the presence of halogens, in particular fluorine, in the final products.

There accordingly remains a need in the art for flame-retardant polycarbonate compositions suitable for thin-wall applications. It would be a further advantage if the compositions were essentially fluorine-free and can achieve a bright white color.

### SUMMARY

The above and other deficiencies of the art are met by a polycarbonate composition including 10-50 wt% of a linear polycarbonate, a branched polycarbonate with p-cumyl phenol as endcaps, or a combination thereof; 5-20 wt% of a polycarbonate-siloxane copolymer having a siloxane content of 30-70 wt%, present in an amount effective to provide 3-14 wt% siloxane repeating units based on the total weight of the composition; 40-60 wt% of a highly branched polycarbonate endcapped with 4-hydroxybenzonitrile; 0.5-15 wt% of a non-fluorinated phosphorus-containing flame retardant; 0.1-5 wt% of a silicone fluid having dissolved therein a silicone resin; optionally, a colorant composition optionally comprising 0.1-10 wt% of TiO₂; optionally, an additive composition; and optionally, 5-25 wt% of glass fibers; each based on the total weight of the polycarbonate composition, which totals 100 wt%,; and wherein the polycarbonate composition comprises fluorinated compounds in an amount effective to provide 1500 ppm or less fluorine to the total composition; and wherein a molded sample of the polycarbonate composition has a UL-94 rating of 5VA or 5VB at a thickness of 3.0 millimeters or below.

In another aspect, a method of manufacture includes combining the above-described components to provide the polycarbonate composition.

In yet another aspect, an article includes the above-described polycarbonate composition.

In still another aspect, a method of manufacture of an article includes molding, extruding, or shaping the above-described polycarbonate composition into an article.

The above described and other features are exemplified by the following detailed description, examples, and claims.

### DETAILED DESCRIPTION

Polycarbonates are thermoplastic resins with many desirable properties but are inherently flammable. Current design trends are focused on thinner designs for purposes of slimness, weight reduction, and size reduction of the overall final product, as well as for the purpose of more complex designs. However, polycarbonates tend to drip when exposed to a flame, and this behavior worsens as the wall thickness decreases. The UL-94 rating of 5VB and 5VA pertains to a stringent flammability standard for polymer materials used in various applications, particularly in electronics and electrical devices. This rating indicates that the material can withstand a vertical burn test without dripping flaming particles and can self-extinguish within a specified time frame. The 5VB rating is more rigorous than the V-0, V-1, and V-2 ratings, as the 5VB rating requires the material to pass a series of five flame applications without dripping or dripping particles that could not ignite cotton below. 5VB and 5VA ratings indicate higher flame resistance for applications that may require stronger safety standards.

Conventional non-chlorinated and non-brominated polycarbonate compositions often incorporate fluorine-based anti-drip agents (e.g., TSAN) in order to pass the UL94 vertical flame test.

Other conventional approaches to reduce dripping and improve the flame test performance include increasing the molecular weight of the polymer and/or adding fillers, thus decreasing the flow of the composition. However, decreasing the flow undesirably makes processing difficult. Another conventional approach to minimize or eliminate dripping is to incorporate a branched polycarbonate with reactive end groups that crosslink when the flame is applied during flame testing. The crosslinking of the resin can decrease the flow of the composition during flame testing without adversely affecting processing conditions, while decreasing and/or inhibiting formation of drips. However, when branched polycarbonates with reactive end groups were used, a fluorinated flame retardant was used in order to achieve even a V-0 flame test rating in thin-walled samples.

Given that more stringent regulations are being put in place to reduce or eliminate the addition of fluorinated materials, for example, perfluoroalkyl and polyfluoroalkyl substances (PFAS), to the compositions used to make final products, there is a need in the art for polycarbonate compositions that can achieve a UL 94 5VB and 5VA flame test rating for molded samples, while also minimizing and/or eliminating the addition of PFAS into the polycarbonate compositions used to make the molded samples.

The inventors hereof have discovered that a non-fluorinated flame retardant including an organophosphorus flame retardant and a poly(carbonate-siloxane) including 30-70 weight percent (wt%) siloxane repeating units, based on the total weight of the poly(carbonate-siloxane), can provide the desired flame retardance while eliminating the need for halogenated additives, such as fluorinated flame retardants and anti-drip agents. Surprisingly, unlike conventional compositions, fluorinated anti-drip agents (e.g., TSAN) and fluorinated flame retardants such as Rimar salt can be omitted in the polycarbonate compositions, thus eliminating added fluorine while providing improved flammability. Advantageously, the polycarbonate compositions can have a UL-94 flame test rating of 5VB at a thickness of 3.0 millimeter (mm) or 2.5 mm and be considered "essentially fluorine-free." As used herein, the phrase "essentially fluorine-free" means that the amount of calculated intentionally added fluorine present in the composition is 1500 ppm or less, less than 1000 ppm, less than 500 ppm, less than 100 ppm, or less than 50 ppm. For example, if 0.5 wt% encapsulated polytetrafluoroethylene (e.g., TSAN, which is 50 wt% PTFE and PTFE estimated to have 76 wt% fluorine content), the amount of calculated intentionally added fluorine would equal 1900 ppm. Further, the polycarbonate compositions described herein can have zero intentionally added fluorine.

In some aspects, the polycarbonate compositions can have a UL-94 flame test rating of 5VB at a thickness of 3.0 mm or 2.5 mm and be considered "essentially halogen-free" per IEC 61249-2-21 or UL 746H. As used herein, the phrase "essentially halogen-free" is as defined by IEC 61249-2-21 or UL 746H. According to International Electrochemical Commission, Restriction Use of Halogen (IEC 61249-2-21), a composition should include 900 parts per million (ppm) or less of each of chlorine and bromine and also include 1500 ppm or less of total bromine, chlorine, and fluorine content. According to UL 746H, a composition should include 900 ppm or less of each of chlorine, bromine, and fluorine and 1500 ppm or less of the total chlorine, bromine, and fluorine content. The bromine, chlorine, and fluorine content in ppm can be calculated from the composition or measured by elemental analysis techniques. Conventional flame retardants can include or exclude halogens, but commonly employed anti-drip agents include PTFE or PTFE-encapsulated styrene-acrylonitrile copolymers (e.g., TSAN) and thus include fluorine. Non-fluorinated flame retardants that are not brominated, chlorinated, or fluorinated have been used in conventional polycarbonate compositions, but an anti-drip agent is usually present in combination with the non-fluorinated flame retardant, causing the halogen content of the composition to exceed the 1500 ppm total halogen limit per IEC 61249-2-21 and UL 746H. Similarly, when flame retardants that are not brominated or chlorinated, but are fluorinated are used in combination with a fluorinated anti-drip agent, then the halogen content of the composition due to the presence of fluorine exceeds the 1500 ppm total halogen limit per IEC 61249-2-21 or UL 746H. Therefore, it would be a particular advantage if conventional anti-drip agents could be minimized or eliminated, so that the anti-drip agent does not contribute halogen content to the total halogen content of the compositions. Accordingly, a variety of non-fluorinated flame retardants that include or exclude halogens can be used in polycarbonate compositions so that the compositions can be considered "essentially halogen-free" per IEC 61249-2-21 or UL 746H.

In addition to minimizing or eliminating intentionally added fluorine from fluorinated additives, the polycarbonate compositions can provide the desired flame test rating in the presence of a high amount of a colorant composition including titanium dioxide. This is advantageous because high loadings of titanium dioxide produce bright white compositions, which are commercially desirable. When a color other than bright white is desired, other colorants or white pigments can be present, which provides added color freedom, allowing for a variety of colors.

The polycarbonate compositions include a specific combination of components, including a linear polycarbonate, a branched polycarbonate, a polycarbonate-siloxane copolymer, a highly branched polycarbonate different from the branched polycarbonate, a non-fluorinated phosphorus-containing flame retardant, and a silicone fluid having dissolved therein a silicone resin. Optionally, a colorant composition, and additive composition, and glass fibers can further be present. Each of these components are described in more detail below.

The polycarbonate compositions include a linear homopolycarbonate, a polycarbonate-siloxane copolymer, and two different branched polycarbonate. "Polycarbonate" as used herein includes homopolycarbonates (wherein each R¹ in the polymer is the same), copolymers including different R¹ moieties in the carbonate ("copolycarbonates"), and copolymers including carbonate units and other types of polymer units, such as ester units or siloxane units. "Polycarbonate" as used herein is inclusive of a polymer having repeating structural carbonate units of formula (1) 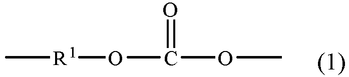 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 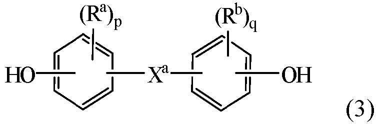 wherein R^{a} and R^{b} are each independently a halogen, C₁₋₁₂ alkoxy, or C₁₋₁₂ alkyl, and p and q are each independently integers of 0-4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group can be cyclic or acyclic, aromatic or non-aromatic, and can further include heteroatoms such as halogens, oxygen, nitrogen, sulfur, silicon, or phosphorus. The C₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

Other useful dihydroxy compounds of the formula HO-R¹-OH include aromatic dihydroxy compounds of formula (6) 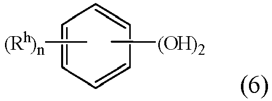 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0-4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

The linear polycarbonate can be a homopolycarbonate, for example a linear bisphenol A homopolycarbonate. The linear homopolycarbonate can be a virgin or recycle linear homopolycarbonate or a combination thereof, for example a virgin linear bisphenol A homopolycarbonate, a recycle linear bisphenol A homopolycarbonate, or a combination thereof. In an aspect, when the linear polycarbonate is present, it includes a virgin linear polycarbonate, e.g., a virgin linear homopolycarbonate, preferably a virgin linear bisphenol A homopolycarbonate. A weight ratio of virgin linear polycarbonate, e.g., virgin linear homopolycarbonate, preferably virgin linear bisphenol A homopolycarbonate to recycle linear polycarbonate, e.g., a recycle linear homopolycarbonate, preferably a recycle linear bisphenol A homopolycarbonate can be, for example, 99:1 to 1:99, or 80:20 to 20:80, or 70:30 to 30:70, or 60:40 to 40:60, or 90:1 to 50:50. In an aspect when the linear polycarbonate is present, it includes a virgin linear polycarbonate, e.g., a virgin linear homopolycarbonate, preferably a virgin linear bisphenol A homopolycarbonate, and no recycle linear polycarbonate, e.g., no recycle linear homopolycarbonate, or no recycle linear bisphenol A homopolycarbonate.

The linear polycarbonates can be manufactured by processes such as interfacial polymerization and melt polymerization, which are known, and are described, for example, in WO 2013/175448 A1 and WO 2014/072923 A1. An endcapping agent (also referred to as a chain stopper agent or chain terminating agent) can be included during polymerization to provide end groups, for example monocyclic phenols such as phenol, p-cyanophenol, and C1-22 alkyl-substituted phenols such as p-cumyl-phenol, p-tertiary-butyl phenol, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

The linear polycarbonate can be present in an amount, for example, from 5-30 wt%, or 10-20 wt%, each based on the total weight of the polycarbonate composition.

In addition to, or instead of, the linear homopolycarbonate, the polycarbonate compositions can include a branched polycarbonate. Branched polycarbonates can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid.

In some aspects, a particular type of branching agent is used to create branched polycarbonates. These branched polycarbonates have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper (endcapping) agent can be used, relative to the amount used when the branching agent is not present. The amount of chain stopper used is generally above 5 mole percent (mol%) and less than 20 mol% compared to the dihydroxy, e.g., bisphenol monomer used.

Such branching agents include aromatic triacyl halides, for example triacyl chlorides of formula (20) 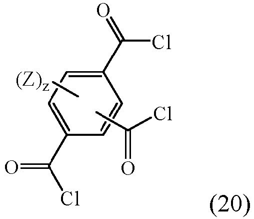 wherein Z is a halogen, C₁₋₃ alkyl, C₁₋₃ alkoxy, C₇₋₁₂ arylalkylene, C₇₋₁₂ alkylarylene, or nitro, and z is 0-3; a tri-substituted phenol of formula (21) 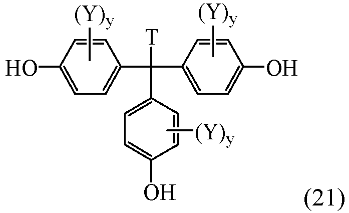 wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, y is 0-4; or a compound of formula (22) (isatin-bis-phenol) 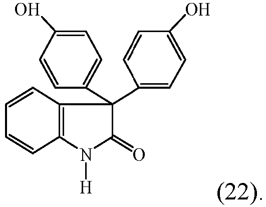 Examples of specific branching agents that are particularly effective in the polycarbonate compositions include trimellitic trichloride (TMTC), tris-p-hydroxyphenylethane (also known as 1,1,1-tris(4-hydroxyphenyl)ethane, or THPE), and isatin-bis-phenol.

The amount of the branching agent used in the manufacture of the branched polycarbonate polymer will depend on a number of considerations, for example the type of R¹ groups in formula (1), the amount of chain stopper (endcapping agent), e.g., a phenol such as phenol, para-cumylphenol, 4-tert-butyl phenol, or the like, and the desired molecular weight of the polycarbonate. In general, the amount of branching agent is effective to provide 0.1-10 branching units per 100 R¹ units, preferably 0.5-8 branching units per 100 R¹ units, and more preferably 0.75-5 branching units per 100 R¹ units. For branching agents having formula (20), the branching agent is present in an amount to provide 0.1-10 triester branching units per 100 R¹ units, preferably 0.5-8, and more preferably 0.75-5 triester branching units per 100 R¹ units. For branching agents having formula (21), the branching agent is present in an amount effective to provide 0.1-10 triphenyl carbonate branching units per 100 R¹ units, preferably 0.5-8, and more preferably 2.5-3.5 triphenylcarbonate units per 100 R¹ units. In some aspects, a combination of two or more branching agents can be used. Alternatively, the branching agents can be added at a level of 0.05-5.0 wt%, or 0.5-3 wt%, or 1-2 wt%. When an endcapping agent includes no functional groups other than a reactive hydroxyl group (e.g., a phenol hydroxy group), the amount of branching (e.g., in mole percent) in the branched polycarbonate generally corresponds to the mole percent of the branching agent used in the manufacture of the branched polycarbonate.

In the branched polycarbonate, the endcapping agent includes no functional groups other than a reactive hydroxyl group, in particular no reactive groups other than the hydroxy of a phenol. Suitable endcapping agents include phenol, para-cumylphenol (4-cumyl phenol), 4-tert-butyl phenol, or the like. In an aspect, the branched polycarbonate is a branched polycarbonate including 0.5-3 mol% of branching, or 1-3 mol% branching. In an aspect, the branched polycarbonate is a homopolycarbonate that includes endcaps derived from p-cumyl phenol, and can be, for example, a branched bisphenol A homopolycarbonate including endcaps derived from phenol, para-cumylphenol (4-cumyl phenol), 4-tert-butyl phenol, or the like, or a branched bisphenol A homopolymer endcapped with p-cumylphenol.

The branched homopolycarbonate, when present, can be a virgin or recycle branched homopolycarbonate or a combination thereof, for example a virgin branched bisphenol A homopolycarbonate, a recycle branched bisphenol A homopolycarbonate, or a combination thereof. In an aspect, when the branched polycarbonate is present, it includes a virgin branched polycarbonate, e.g., a virgin conventional branched homopolycarbonate, preferably a virgin branched bisphenol A homopolycarbonate. A weight ratio of virgin conventional branched polycarbonate, e.g., virgin branched homopolycarbonate, preferably virgin branched bisphenol A homopolycarbonate to recycle first branched polycarbonate, e.g., a recycle first branched homopolycarbonate, preferably a recycle branched bisphenol A homopolycarbonate can be, for example, 99:1 to 1:99, or 80:20 to 20:80, or 70:30 to 30:70, or 60:40 to 40:60, or 90:1 to 50:50. In an aspect when the branched polycarbonate is present, it includes a virgin branched polycarbonate, e.g., a virgin branched homopolycarbonate, preferably a virgin branched bisphenol A homopolycarbonate, and no recycle branched polycarbonate, e.g., no recycle branched homopolycarbonate, or no recycle branched bisphenol A homopolycarbonate.

The branched polycarbonate can be present in an amount, for example, from 5-30 wt%, or 10-20 wt%, each based on the total weight of the polycarbonate composition.

The linear and branched polycarbonates can have an intrinsic viscosity, as determined in chloroform at 25°C, of 0.3-1.5 deciliters per gram (dl/gm), preferably 0.45-1.0 dl/gm. The linear and branched polycarbonates can have a weight average molecular weight (M_{w}) of 10,000 to 200,000 grams per mole (g/mol), preferably 20,000 to 100,000 g/mol, as measured by gel permeation chromatography (GPC), using a crosslinked styrene-divinylbenzene column using linear polycarbonate standards, optionally further calculated for the type of polycarbonate being analyzed. GPC samples are prepared at a concentration of 1 mg per ml, and are eluted at a flow rate of 1.5 ml per minute.

When a single linear polycarbonate, e.g., a single linear homopolycarbonate such as linear bisphenol A polycarbonate is used, the linear homopolycarbonate can have an M_{w} of at least 10,000 g/mol, or 15,000-50,000 g/mol, or 25,000-42,000 g/mol, or 24,000-36,000 g/mol, or 27,000-33,000 g/mol, each as determined by GPC using linear polycarbonate standards as described above. When two or more of the linear polycarbonates are used, the two or more linear homopolycarbonates can have an average weight average molecular weight of least 10,000 g/mol, or 15,000-50,000 g/mol, or 25,000-42,000 g/mol, or 24,000-36,000 g/mol, or 27,000-33,000 g/mol, each as determined by GPC using linear polycarbonate standards as described above.

The branched polycarbonate, when present can have a weight average molecular weight of at least 20,000 g/mol, or 25,000-40,000 g/mol, preferably 25,000-35,000 g/mol, or 27,000-33,000 g/mol, each as determined by GPC using polycarbonate standards as described above.

The polycarbonate compositions further include one or more poly(carbonate-siloxane)s, also referred to in the art as polycarbonate-polysiloxane copolymers. The polysiloxane blocks include repeating diorganosiloxane units as in formula (10) 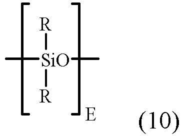 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the polycarbonate composition, the desired properties of the composition, and like considerations. Generally, E has an average value of 2-1,000, preferably 2-500, 2-200, or 2-125, 5-80, or 10-70. In an aspect, E has an average value of 10-80 or 10-40, and in still another aspect, E has an average value of 40-80, or 40-70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (11) 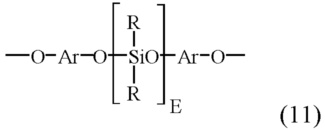 wherein E and R is each as defined if formula (10); each R can be the same or different and is as defined above; and Ar can be the same or different and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 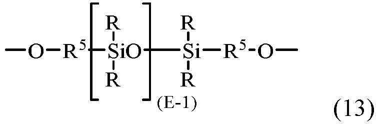 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 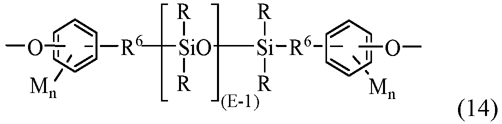 wherein R and E are as defined above. R⁶ in formula (14) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 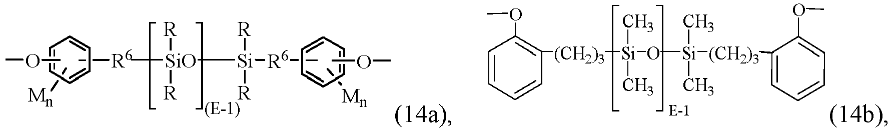 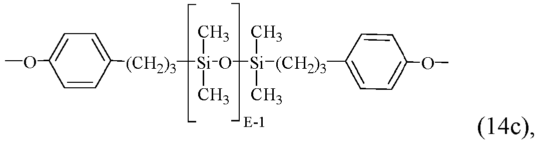 or a combination thereof, wherein E has an average value of 2-200, 2-125, 5-125, 5-100, 5-50, 20-80, or 5-20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

The poly(carbonate-siloxane) copolymers can include 30-99 wt% of carbonate units and 1-70 wt% siloxane units. It has been found by the inventors hereof that advantageous results are obtained using poly(carbonate-siloxane) copolymers that can have a siloxane content (i.e., siloxane repeat units, preferably dimethyl siloxane units) toward the upper end of the 1-70 wt% range, for example, greater than 30 wt% to less than or equal to 70 wt% siloxane content, based on the total weight of the poly(carbonate-siloxane). Within this range, such poly(carbonate-siloxane)s can have a siloxane content of 35-70 wt%, or 35-65 wt%, or 35 wt% to 55 wt%, or 35 wt% to 45 wt%, based on the total weight of the poly(carbonate siloxane) copolymer. In an aspect, the poly(carbonate-siloxane)s have 40 wt% siloxane content, based on the total weight of the poly(carbonate siloxane) copolymer.

In an aspect, a blend is used, in particular a blend of a bisphenol A homopolycarbonate and a poly(carbonate-siloxane) block copolymer of bisphenol A blocks and eugenol-capped polydimethylsiloxane (PDMS) blocks, of the formula 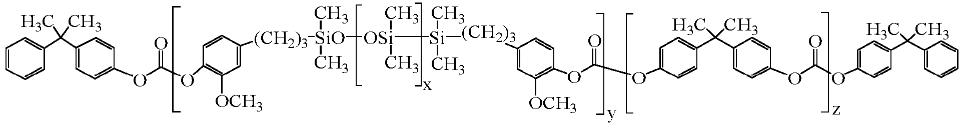 wherein x is 1-200, preferably 20-85, preferably 30-70 or 35-55; and z is 1-1000, or 10-800. In an aspect, x is 20-85, preferably 30-70 or 35-55, y is 1-90 and z is 1-600, and in another aspect, x is 30-50, y is 10-30 and z is 45-600. The polysiloxane blocks can be randomly distributed or controlled.

The poly(carbonate-siloxane)s can have a melt volume flow rate, measured at 300°C/1.2 kg, of 0.1-50 cubic centimeters per 10 minutes (cc/10 min), preferably 2-30 cc/10 min. Combinations of the poly(carbonate-siloxane)s of different flow properties can be used to achieve the overall desired flow property. The poly(carbonate-siloxane)s can have an M_{w} of 25,000-45,000 g/mol, or 28,000-40,000 g/mol, or 35,000-40,000 g/mol per GPC relative to linear bisphenol A homopolycarbonate standards as described above.

The highly branched polycarbonate includes carbonate units as described above and manufactured using the branching agents described above. The highly branched polycarbonates further include moieties derived from endcapping agents having a (i.e., one or more) functional groups in addition to a hydroxyl group (e.g., a hydroxyl of a phenol), where the functional group can be a cyano group, olefin group, halogen, ester group, ether group, or a combination thereof. The functional groups provide additional branching during manufacture of the branched polycarbonates. A suitable functional group is a cyano group, and in an aspect the branching agent is p-cyanophenol (4-hydroxybenzonitrile). In an aspect, the highly branched polycarbonate is manufactured using trimellitic trichloride, 1,1,1-tris(4-hydroxyphenyl)ethane, or a combination of trimellitic trichloride and 1,1,1-tris(4-hydroxyphenyl)ethane as a branching agent, and a phenol having a functional group substituent, such as a cyano group, olefin group, halogen, ester group, ether group, or a combination thereof, preferably a cyano group as an endcapping agent. In a specific aspect, the branching agent is 1,1,1-tris(4-hydroxyphenyl)ethane and the endcapping agents is p-cyanophenol (4-hydroxybenzonitrile). The endcapping agent having a functional group can optionally be used in combination with an endcapping group not including the functional group as described above, for example phenol, p-t-butylphenol, p-cumylphenol, or a combination thereof, to produce the highly polycarbonate.

The highly branched polycarbonate is more highly branched than the branched polycarbonate. For example, the highly branched polycarbonate can have 5% or more, or 10% or more, or 30% or more branching than the branching of the branched polycarbonate. In an aspect, the highly branched polycarbonate has 5-30%, or 10-30%, or 5-20%, or 10-20%, or 10-30% more branching than the branching of the branched polycarbonate In another aspect, the branched polycarbonate can have 0.5-3 mol% of moieties derived from a branching agent, based on the total moles of the carbonate repeat units, and the highly polycarbonate can have greater than 3 mol%, for example greater than 3-8 mol%, or 3.5-8 mol%, or 4-8 mol%, or 4-7 mol% of moieties derived from a branching agent, based on the total moles of the carbonate repeat units.

The highly branched polycarbonate can be present in the polycarbonate compositions in an amount, for example, from 30-60 wt%, based on the total weight of the polycarbonate composition. Within this range, the highly polycarbonate can be present in an amount from 35-55 wt%, or 45-55 wt% of the total polycarbonate composition.

As indicated above, the polycarbonates of the polycarbonate composition can include a recycle polycarbonate, including a post-consumer recycle polycarbonate ("PCR-PC"). PCR-PC is derived or recycled from post-consumer sources including, but not limited to, household appliance waste such as a television, air conditioner, washing machine, refrigerator, or the like; an optical disc; a plastic bottle, such as a plastic beverage bottle; fishing net; textiles, and the like. In contrast, virgin polycarbonate polymers refer to polycarbonate polymers produced directly from petrochemical feedstocks, such as natural gas or crude oil, which have never been used or processed before.

Regardless of the source, the recycle polycarbonate can be similar or even identical to the chemical composition of the corresponding original polycarbonate. A possible difference between the original polycarbonate and the recycle or PCR-PC is the presence of at least one impurity that is not present in the original material. For example, one or more additives conventionally used in the manufacture of polycarbonates can be present as impurities, for example a processing residues such as a lubricant, mold release agents antistatic agent, stabilizer, light stabilizer, flame retardant, metals (e.g., iron, aluminum, and copper), dyes, pigments, and the like. In addition, impurities can include polyurethane particles that cannot be completely removed during the recovery process. In an aspect, the level of impurity in the recycle or PCR-PC is less than about 5 wt%, or less than about 3 wt%, or less than about 2 wt%, based on the total weight of the recycle polycarbonate. If present, the recycle polycarbonate is selected such the any impurities do not significantly adversely affect the properties of the compositions described herein.

The polycarbonate compositions do not include a fluorine-containing flame retardant such as Rimar salt. In another aspect, other halogenated flame retardants, for example a brominated polycarbonate is omitted from the polycarbonate compositions. Preferably, the polycarbonate compositions include no flame retardant that includes a halogen (Br, F, Cl, I, or As). The polycarbonate compositions do further include a non-fluorinated flame retardant including phosphorus, in particular an organophosphorus flame retardant. Such compounds include organic compounds having at least one phosphorus-nitrogen bond, aromatic organophosphorus compounds having at least one organic aromatic group and at least one phosphorus containing group.

The organophosphorus flame retardant including a phosphorus-nitrogen bond can be a phosphazene, phosphorus ester amide, phosphoric acid amide, phosphonic acid amide, phosphinic acid amide, or tris(aziridinyl) phosphine oxide. These flame-retardant additives are commercially available. In an aspect, the organophosphorus flame retardant containing a phosphorus-nitrogen bond is a phosphazene or cyclic phosphazene of the formulas 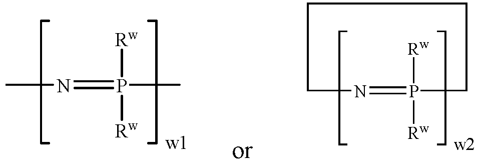 wherein w1 is 3-10,000; w2 is 3-25, or 3-7; and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

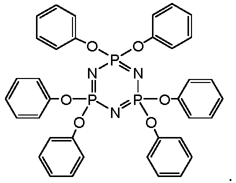

A preferred non-fluorinate flame retardant is phosphazene, for example a phosphazene commercially available as LY202 (manufactured and distributed by Lanyin Chemical Co., Ltd), FP-110 (manufactured and distributed by Fushimi Pharmaceutical Co., Ltd.), and SPB-100 (manufactured and distributed by Otsuka Chemical Co., Ltd.)

Organophosphorus flame retardants having at least one organic aromatic group can be used, where the aromatic group is a substituted or unsubstituted C₃₋₃₀ group containing one or more of a monocyclic or polycyclic aromatic moiety (which can optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group can be directly bonded to the phosphorus-containing group, or bonded via another moiety, for example an alkylene group. The aromatic moiety of the aromatic group can be directly bonded to the phosphorus-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination including at least one of the foregoing.

Other examples include organophosphorus flame retardants such as a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorus-containing groups can be the same or different, provided that at least one R is an aromatic group. A combination of different phosphorus-containing groups can be used. The aromatic group can be directly or indirectly bonded to the phosphorus, or to an oxygen of the phosphorus-containing group (i.e., an ester).

Another of organophosphorus flame retardant that can be used is an oxaphosphorinoxide of the Formula (23) below.

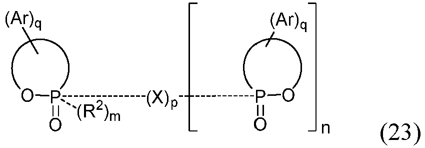

In Formula (23), the phosphorus atom and one oxygen atom are part of a cyclic structure, for example, a five or six membered ring and q is at least two. Each Ar is independently C₆₋₁₈ aryl, preferably benzene, which is optionally substituted with a C₁₋₁₈ hydrocarbyl group, or a C₁₋₁₈ hydrocarbyloxy group (e.g., -O-hydrocarbyl). When n and p are each 0 and m is 1 ("mono-DOPO" type compounds), then R² is hydrogen, C₁-C₁₈ alkyl, C₃₋₁₀ cycloalkyl, (C₁₋₆ alkylene)C₃₋₁₀ cycloalkyl, C₆₋₁₈ aryl, (C₁₋₆ alkylene)C₆₋₁₈ aryl, C₃₋₁₂ heteroaryl, or (C₁₋₆ alkylene)C₃₋₁₂ heteroaryl. In the foregoing groups at least one hydrogen atom of these groups can be substituted with a group having an N, S, O, or F atom. In any of the alkyl or cycloalkyl groups of R², any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom. In Formula (23), when n and p are each 1 or more and m is 0 ("Di-DOPO" type compounds), then X is C₁-C₁₈ alkylidene, C₃₋₁₀ cycloalkylidene, C₆₋₁₈ arylene, C₃₋₁₂ heteroarylene, a group derived from Formula (3), or a group represented by -L¹-X'-L²-. The L¹ and L² linker groups are each independently a single bond, C₁-C₁₈ alkylidene, or a C₃₋₁₀ cycloalkylidene, where any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom. X' is C₁-C₁₈ alkylidene, C₃₋₁₀ cycloalkylidene, C₆₋₁₈ arylene, C₃₋₁₂ heteroarylene, or a group derived from Formula (3).

Specific examples of an oxaphosphorinoxide include 9,10-dihydro-9-oxo-10-phosphaphenanthrene-10-oxide (23a, "DOPO"), commercially available from Sanko Co., Ltd.., under the trade name Sanko-HCA, 3-(6-oxidodibenzo[c,e][1,2]oxaphosphinin-6-yl)propanamide (23b, "AAM-DOPO"), and 6-[(1-oxido-2,6,7-trioxa-1-phosphabicyclo[2.2.2.]oct-4-yl)methoxy-6-oxide (23c, "DOPO-PEPA").

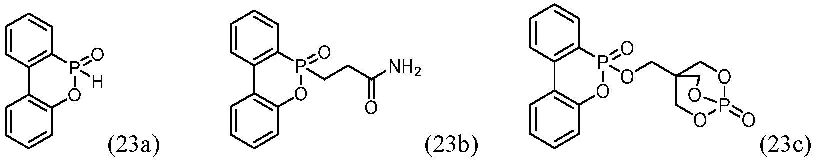

A specific formula for a Di-DOPO compound is formula (24). 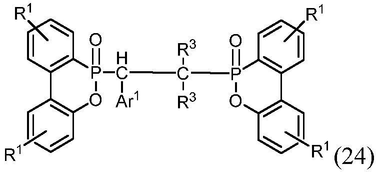 wherein Ar¹ is C₃₋₁₈ heteroaryl or C₆₋₁₈ aryl, each instance of R³ is independently hydrogen, C₁₋₁₈ alkyl, C₃₋₁₈ heteroaryl or C₆₋₁₈ aryl, each instance of R¹ is independently C₁₋₁₈ alkyl, C₃₋₁₈ heteroaryl or C₆₋₁₈ aryl, and any hydrogen atom on an aryl or heteroaryl ring can be optionally substituted with a C₁₋₁₈ alkyl group. An exemplary Di-DOPO compound is HTP-6123G, commercially available from Guizhou Yuanyi Mining Group Co.

Other organophosphorus flame retardants include a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups can be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorus compounds are also useful, for example, compounds of the formulas 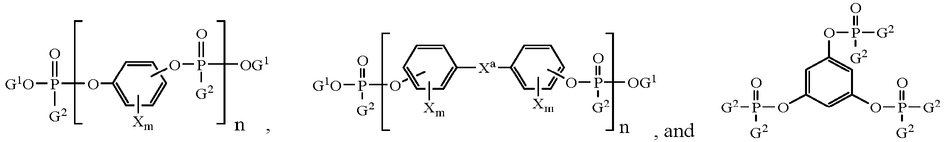 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0-4, and n is 1-30. In a specific aspect, X^{a} is a single bond, methylene, isopropylidene, or 3,3,5-trimethylcyclohexylidene.

Specific aromatic organophosphorus compounds are inclusive of acid esters of formula (9) 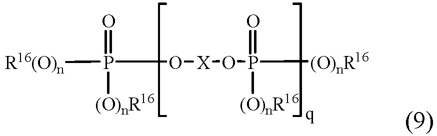 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which can be OH-substituted and can contain up to 8 ether bonds, provided that at least one R¹⁶ or X is an aromatic group; each n is independently 0 or 1; and q is from 0.5-30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5-30. In some aspects each R¹⁶ is aromatic, e.g., phenyl; each X is a mono- or poly-nuclear aromatic C₆₋₃₀ moiety, including a moiety derived from formula (2); n is one; and q is from 0.8-15. In other aspects, each R¹⁶ is phenyl; X is cresyl, xylenyl, propylphenyl, or butylphenyl, one of the following divalent groups 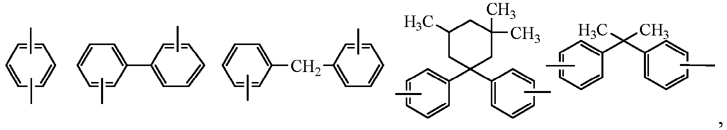 or a combination including one or more of the foregoing; n is 1; and q is from 1-5, or from 1-2. In some aspects at least one R¹⁶ or X corresponds to a monomer used to form the polycarbonate, e.g., bisphenol A, resorcinol, or the like. Aromatic organophosphorus compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The polycarbonate compositions can include a combination of organophosphorus flame retardants. For example, the flame retardant can be one including a phosphorus-nitrogen bond, for example phosphazene, and another organophosphorus flame retardant as described above, provided that the compositions can achieve a UL 94 5VB or 5VA rating, and the desired physical properties of the compositions are obtained. In addition to the organophosphorus flame retardant, in particular one containing a phosphorus-nitrogen bond such as a phosphazene an inorganic non-fluorinated flame retardant can be present, for example salts of aromatic sulfonates such as sodium benzene sulfonate, sodium toluene sulfonate (NATS), and the like, salts of aromatic sulfone sulfonates such as potassium diphenylsulfone sulfonate (KSS), and the like; salts formed by reacting, for example, an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃. KSS and NATS, are particularly useful. Exemplary amounts of an aromatic sulfone sulfonate salt can be 0.01-1.0 wt%, or 0.1-0.6 wt%, based on the total weight of the polycarbonate composition.

The non-fluorinated organophosphorus flame retardant can be present in an amount effective to provide at least 0.3 wt%, at least 0.4 wt%, at least 0.5 wt%, or at least 0.7 wt% phosphorus, less than or equal to 3 wt%, less than or equal to 2.5 wt%, less than or equal to 2.0 wt%, less than or equal to 1.5 wt%, less than or equal to 1.2 wt%, or less than or equal to 1.0 wt% phosphorus, each based on the total weight of the polycarbonate composition. The non-fluorinated flame retardant can be present in an amount effective to provide phosphorus in a range which includes any of the foregoing limits.

The polycarbonate compositions minimize or eliminate conventional anti-drip agents, in particular fluorinated anti-drip agents. Anti-drip agents include, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN includes 50 wt% PTFE and 50 wt% SAN, based on the total weight of the encapsulated fluoropolymer. The SAN can include, for example, 75 wt% styrene and 25 wt% acrylonitrile based on the total weight of the copolymer. In an aspect, the fluorinated anti-drip agent is present in an amount effective to provide 0.15 wt% or less fluorine to the total composition. In a preferred aspect, a fluorinated anti-drip agent is excluded from the polycarbonate compositions.

The polycarbonate composition further includes a specific silicone composition, in particular a silicone fluid and a silicone resin dissolved in the silicone fluid. The silicone fluid is of the formula 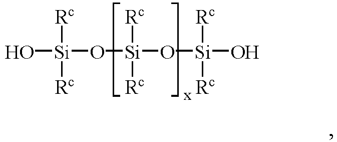 and the silicone resin comprises M and Q units of the formula 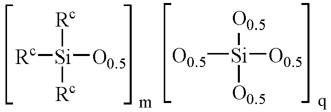 wherein
each R^{c} is independently a C₁₋₆ alkyl, C₁₋₆ alkylene, C₆₋₁₂ aryl, optionally wherein up to 10% of the R^{c} groups can be hydrogen or hydroxide;
x is an average number of the repeat units in the silicone fluid; and
m and q are each respectively the average number of M repeat units and Q repeat units in the silicone resin.

In an aspect, each R^{c} is methyl in the silicone fluid and the silicone resin. The average value of x can vary, provided that fluid is obtained. For example, x can have an average value 1-5,000 or higher. The silicone fluid can have a viscosity, for example, of 1-200,000 centipoise (cP) measured at 25°C, or 5-150,000 cP measured at 25°C, or 5-100,000 cSt measured at 25°C, or 5-50,000 cP measured at 25°C. The average value of m and q can also vary, provided that the silicone resin is soluble in the silicone fluid.. For example, m and q can have an average value 2-1,000 or higher, or 10-1,000. The silicone composition including the silicone fluid and the silicone resin can have a viscosity of 200,000-900,000 cP measured at 25°. No halogens are present in the silicone composition.

The polycarbonate compositions optionally include a colorant composition including a dye, pigment, or the like. In an aspect, the colorant composition includes 0.1-10 wt% of titanium dioxide, for example 1-10 wt%, 3-10 wt%, 4-10 wt%, or 5-10 wt%, each based on the total weight of the polycarbonate compositions. Smaller amounts of titanium dioxide (e.g., 0.1-1 wt%) can be present in the composition by way of any of the recycle polycarbonates. Alternatively, larger amounts of titanium dioxide (e.g., 4-10 wt%, or 5-10 wt%) can provide bright white compositions that are commercially desirable. The titanium dioxide can have an average particle size of 0.01-10 micrometers (µm), or 0.05 µm to 1 µm, preferably 0.1 µm to 0.6 µm.

In some aspects, white pigments other than titanium dioxide can be present in addition to titanium dioxide or instead of titanium dioxide, provided that the desired color and a UL 94 5VB or 5VA rating is achieved. Examples of these white pigments include zinc sulfide, tin oxide, aluminum oxide, zinc oxide, calcium sulfate, barium sulfate calcium carbonate (e.g., chalk), magnesium carbonate, antimony oxide, white lead (a basic lead carbonate), lithopone (a combination of barium sulfate and zinc sulfide), sodium silicate, aluminum silicate, silicon dioxide, mica, clay, talc, metal doped versions of the foregoing materials, or a combination thereof.

Other colorants can be present instead of or in addition to titanium dioxide, such as the white pigments other than titanium dioxide; dyes; and non-white pigments. Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3ʺʺ,5ʺʺ-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or a combination thereof. Useful pigments include organic materials such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24. Useful inorganic pigments include metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; and ultramarine blue.

The total amount of the colorant composition, when present, can be 0.01-12 wt%, 0.1-10 wt%, 1-3 wt%, or 5-12 wt%, each based on the total weight of the polycarbonate composition. In an aspect, no colorant compositions is present.

The polycarbonate compositions can optionally include an additive composition including various additives ordinarily incorporated into polymer compositions of this type, with the proviso that the additive(s) are selected so as to not significantly adversely affect the desired properties of the polycarbonate composition, in particular flame resistance, impact resistance and the melt volume rate. Such additives can be mixed at a suitable time during the mixing of the components for forming the composition. Additives include antioxidants, heat stabilizers, light stabilizers, ultraviolet (UV) light stabilizers, plasticizers, lubricants, mold release agents, antistatic agents, surface effect additives, and radiation stabilizers. A combination of additives can be used, for example a combination of a heat stabilizer, mold release agent, and ultraviolet light stabilizer. In general, the additives are used in the amounts generally known to be effective. For example, the total amount of the additives can be 0.01-10 wt%, 0.01-5 wt%, 0.01-2 wt%, or 0.01-1 wt%, each based on the total weight of the polycarbonate composition.

The polycarbonate compositions can optionally include glass fibers, which can be non-bonding glass fibers, bonding glass fibers, or a combination thereof. A non-bonding glass fiber, also characterized as a non-binding glass fiber, is a glass fiber filler that does not provide specific adhesion to a polymer resin to which it is added. That is, individual fibers of the glass fiber filler may not demonstrate an affinity towards the polymer matrix. Comparatively, bonding glass fiber provides specific adhesion with the specific polymer to which it is added. A bonding glass fiber filler can exhibit affinity toward the polycarbonate resin matrix. This affinity can be attributed to the glass sizing, among a number of other forces. Bonding glass fibers can outperform non-bonding glass fibers especially with respect to tensile strength, while modulus is also higher, without a significant drop in impact. Bonding glass fibers have a sizing onto the surface of the glass fibers to allow good coupling of the fibers to the thermoplastic matrix, and as such improve properties such as strength and stiffness. For instance, this can be achieved with a silane coating, which chemically bonds with the resin.

The non-bonding glass fiber can be E-glass, S-glass, AR-glass, T-glass, D-glass, and R-glass. In an aspect, the non-bonding glass fiber is selected from E-glass, S-glass, and a combination thereof. In one example, the non-bonding glass fiber is an E-glass or EC glass type. The non-bonding glass fibers can be sized or unsized. Sized glass fibers are coated on their surfaces with a sizing composition selected for compatibility with the polycarbonate. The sizing composition facilitates wet-out and wet-through of the polycarbonate upon the fiber strands and assists in attaining desired physical properties in the polycarbonate composition. In another aspect, the non-bonding glass fiber is sized with a coating agent that can be used, for example in an amount of 0.1-5 wt%, or 0.1-2 wt%, each based on the weight of the glass fibers.

In preparing the glass fibers, a number of filaments can be formed simultaneously, sized with the coating agent, and then bundled into what is called a strand. Alternatively the strand itself can be first formed of filaments and then sized. The amount of sizing used is generally that amount which is sufficient to bind the glass filaments into a continuous strand and ranges, for example 0.15 wt%, or 0.1-2 wt%, each based on the weight of the glass fibers. The non-bonding glass fiber can be continuous or chopped. In some aspects, the glass fiber is chopped. Glass fibers in the form of chopped strands can have a length of 0.3 mm to 10 cm, or 0.5 mm to 5 cm, or 1.0 mm to 2.5 cm, 0.2-20 mm, or 0.2-10 mm, or 0.7-7 mm. In a still further aspect, the glass fiber can have a length of 1 mm or longer, or 2 mm or longer.

The glass fibers can be included in any amount so as to not significantly adversely affect the desired properties of the polycarbonate composition, in particular flame resistance. In some aspects, the glass fibers can be present from 5-45 wt%, 5-35 wt%, 5-30 wt%, or from 5-20 wt%, or from 5-15 wt%, or from 5-10 wt% based on the total weight of the polycarbonate composition, which sums to 100 wt%.

The polycarbonate compositions can be manufactured by various methods. For example, powdered polycarbonates, non-halogenated flame retardant, and/or optional components are first blended, optionally with fillers in a HENSCHEL-Mixer high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat or downstream through a side stuffer. Additives can also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared can be one-fourth inch long or less as desired. Such pellets can be used for subsequent molding, shaping, or forming.

A molded sample of the polycarbonate composition can have a flame test rating of 5VB or 5VA, as measured according to UL-94 at a thickness of 3 millimeter or 2.5 millimeter.

The polycarbonate composition can have one or more of a melt mass flow rate higher than 5 gram per 10 minutes (g/10 min), measured under a load of 1.2 kg at 300 °C with a dwelling time of 360 seconds, in accordance with ASTM D1238-04 (Global test method); an Izod notched impact energy of at least 500 J/m, measured at 23°C, at least 200 J/m measured at - 30°C, or at least 100 J/m measured at -40°C, each on a sample of 3.2 mm thickness with a pendulum energy of 5 pounds per foot (lb/ft) according to ASTM D256; and a heat deflection temperature of at least 100°C, measured at 1.82 MPa at a thickness of 3.2 mm in accordance with ASTM D648.

The polycarbonate compositions can have a bromine or chlorine content of less than or equal to 100 parts per million by weight (ppm), less than or equal to 75 ppm, or less than or equal to 50 ppm; or a total bromine and chlorine content of less than or equal to 100 parts per million by weight, or less than or equal to 75 ppm, or less than or equal to 50 ppm. based on the total parts by weight of the polycarbonate composition. The polycarbonate compositions can have a bromine, chlorine, or fluorine content of less than or equal to 100 ppm, less than or equal to 75 ppm, or less than or equal to 50 ppm, based on the total parts by weight of the composition. In an aspect, the polycarbonate composition has a combined bromine, chlorine, and fluorine content of less than or equal to 100 ppm, less than or equal to 75 ppm, or less than or equal to 50 ppm, based on the total parts by weight of the composition.

In an aspect, the polycarbonate composition includes 5-25 wt%, or 5-20 wt% of the linear polycarbonate, preferably the linear homopolycarbonate, more preferably the linear bisphenol A homopolycarbonate, where the linear polycarbonate can be virgin or recycled; 10-25 wt% of the branched polycarbonate, preferably the branched homopolycarbonate, more preferably the branched bisphenol A homopolycarbonate, wherein the branched polycarbonate can be virgin or recycle; 5-20 wt%, or 8-16 wt% of a poly(carbonate-siloxane) having 30-70 wt% siloxane; 40-60 wt% of the highly branched polycarbonate; 2-10 wt% of the nonfluorinated organophosphorus flame retardant, preferably a phosphazene; 0.1-5 wt% of the silicone fluid having dissolved therein a silicone resin; 0.03-5 wt% of the additive composition; optionally, a colorant composition optionally comprising 0.1-10 wt% of TiO₂; and optionally, 5-25 wt% of glass fibers; each based on the total weight of the polycarbonate composition, which totals 100 wt%; and wherein the polycarbonate composition comprises fluorinated compounds in an amount effective to provide 1500 ppm or less, 1000 ppm or less, 500 ppm or less, or 200 ppm or less of fluorine to the total composition; and wherein a molded sample of the polycarbonate composition has a UL-94 rating of 5VB or 5VA at a thickness of 3.0 millimeters or at 2.5 millimeters. An amount of fluorine present in these compositions can be below 20 ppm as determined in accordance with ASTM D7359-23. The polycarbonate compositions can have a combined bromine, chlorine, and fluorine content of less than or equal to 500 ppm, or less than or equal to 100 ppm, or less than or equal to 75 ppm, or less than or equal to 50 ppm, based on the total parts by weight of the composition. The polycarbonate composition can have one or more of a melt mass flow rate higher than 5 gram per 10 minutes (g/10 min), measured under a load of 1.2 kg at 300 °C with a dwelling time of 360 seconds, in accordance with ASTM D1238-04 (Global test method); an Izod notched impact energy of at least 600 J/m, measured at 23°C, at least 400 J/m measured at -30°C, or at least 300 J/m measured at -40°C, each on a sample of 3.2 mm thickness with a pendulum energy of 5 pounds per foot (lb/ft) according to ASTM D256; and a heat deflection temperature of at least 100°C, measured at 1.82 MPa at a thickness of 3.2 mm in accordance with ASTM D648.

Shaped, formed, or molded articles including the polycarbonate compositions are also provided. The polycarbonate compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermoformed article, a foamed article, a layer of a multi-layer article, a substrate for a coated article, or a substrate for a metallized article. In addition, the polycarbonate compositions can be used for such applications as a molded housing and other devices such as electrical circuit housing.

Thin films including the polycarbonate compositions are also provided. The thin film of the polycarbonate composition can be prepared by extrusion of the polycarbonate composition.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 1 were used.

**Table 1.**

| Name | Description (Trade Name) | Source |
|---|---|---|
| PC-Si-1 | Poly(bisphenol A carbonate-dimethyl siloxane) copolymer having a siloxane content of 40 wt%, average PDMS block length of 45 units, M_{w} = 37,000-38,000 g/mol per GPC relative to linear bisphenol A homopolycarbonate standards, produced by interfacial polymerization and endcapped with p-cumylphenol | SABIC |
| PC-Si-2 | Poly(bisphenol A carbonate-polydimethyl siloxane) copolymer having a siloxane content of 20 wt%, average PDMS block length of 45 units, M_{w} =29,000-31,000 g/mol per GPC relative to linear bisphenol A homopolycarbonate standards, produced by interfacial polymerization and endcapped with p-cumylphenol, PDI = 2-3 | SABIC |
| HB-PC | Highly branched bisphenol A homopolycarbonate produced via interfacial polymerization, containing 3 mol% 1,1,1-tris(4-hydroxyphenyl)ethane (THPE) branching agent, peak melt viscosity of 8000 poise based upon parallel plate rheology testing, endcapped with p-cyanophenol (4-hydroxybenzonitrile) | SABIC |
| B-PC | Branched bisphenol A homopolycarbonate produced via interfacial polymerization, containing 3 mol% 1,1,1-tris(4-hydroxyphenyl)ethane (THPE) branching agent, M_{w}=29,000-31,000 g/mol, determined by GPC using bisphenol A polycarbonate standards, endcapped with p-cumylphenol | SABIC |
| PC-1 | Linear poly(bisphenol A carbonate), CAS Reg. No, 25971-63-5, M_{w} = 20,000-22,000 g/mol per GPC relative to linear bisphenol A homopolycarbonate standards, produced via interfacial polymerization and endcapped with phenol | SABIC |
| PC-2 | Linear bisphenol A polycarbonate, CAS Reg. No, 25971-63-5, M_{w} = 29,000-31,000 grams per mole per GPC relative to linear bisphenol A homopolycarbonate standards, produced via interfacial polymerization and endcapped with p-cumylphenol | SABIC |
| PCR-PC | Post-consumer recycle (PCR) bisphenol A polycarbonate having a melt flow rate of 12-16 g/10 mins (300°C, 1.2 kg) and a light transmittance of greater than 82% at a thickness of 3 mm, obtained as PC-116A | Ningbo XuRi HongYu Technology Co., Ltd |
| PCR-BPC | Post-consumer recycle (PCR) branched bisphenol A polycarbonate from water bottles having a melt flow rate less than 6 g/10 mins (300°C, 1.2 kg) and a dark blue color, obtained as WB PCR_D9102A | Ningbo XuRi HongYu Technology Co., Ltd |
| PFAS | Potassium perfluorobutane sulfonate (Rimar salt) | 3M |
| MP-Si | Polymethylphenylsiloxane (TSF437) | Momentive |
| OPCT-Si | Octaphenylcyclotetrasiloxane (SR476) | Momentive |
| PPZ | Phenoxyphosphazene (Rabittle FP-110) | Fushimi |
| BZT-1 | Phenol, 2-(2H-benzotriazol-2-yl)-4,6-bis(1-methyl-1-phenylethyl) (TINUVIN 234) | BASF |
| BZT-2 | 2phenol, 2-(2H-benzotriazol-2-yl)-4-(1,1,3,3, tetramethylbutyl) (TINUVIN 329) | BASF |
| AO-1 | Tris(2,4-di-tert-butylphenyl)phosphite (IRGAFOS 168) | BASF |
| AO-2 | Octadecyl β - (3,5-di- tert -butyl-4-hydroxy phenyl)-propionate (IRGANOX 1076) | BASF |
| AO-3 | Bis (2,4-dicumylphenyl) pentaerythritol diphosphite (DOVERPHOS S-9228) | Dover |
| Si-fluid | High viscosity silicone including a combination of a linear silicone fluid and a silicone resin soluble in the fluid, available as SFR100 | Momentive |
| TiO₂ | Titanium dioxide, available as KRONOS 2233 | Kronos |
| PY | Pigment yellow 138 | BASF |
| PTS | Pentaerythritol tetrastearate | FACI SpA |

The final pellet compounding process was implemented on laboratory-scale extruder (W&P ZSK26Mc) using internal screw configuration S-3-1B. Unless specifically indicated otherwise, all of the base polymer, impact modifier, and additives were fed from throat. The compounding was run with screw speed at 400 revolutions per minute (rpm) and output at 25 kg/hr. The temperature profiles and molding conditions are shown in Tables 2 and 3.

**Table 2.**

| Parameters | Unit | Screw S-3-1B |
|---|---|---|
| Compounder Type | \ | W &P ZSK26Mc |
| Feed (Zone 0) Temp | \ | 50 |
| Zone 1 Temp | °C | 100 |
| Zone 2 Temp | °C | 265 |
| Zone 3 Temp | °C | 265 |
| Zone 4 Temp | °C | 265 |
| Zone 5 Temp | °C | 265 |
| Zone 6 Temp | °C | 265 |
| Zone 7 Temp | °C | 265 |
| Zone 8 Temp | °C | 265 |
| Zone 9 Temp | °C | 265 |
| Zone 10 Temp | °C | 265 |
| Zone 11 Temp | °C | 265 |
| Die Temp | °C | 265 |

An Engel 45 molding machine was used to mold the test parts for standard physical property testing. The parameters are provided in Table 3.

**Table 3.**

| Molding parameters | unit | Value |
|---|---|---|
| Pre-drying time | Hour | 4 |
| Pre-drying temp | °C | 120 |
| Hopper temp | °C | 50 |
| Rear - Zone 1 temp | °C | 290 |
| Middle - Zone 2 temp | °C | 300 |
| Front - Zone 3 temp | °C | 300 |
| Nozzle temp | °C | 300 |
| Mold temp | °C | 90 |

Testing methods are described in Table 4.

**Table 4.**

| Property | Standard | Conditions | Specimen |
|---|---|---|---|
| Tensile properties | ASTM D 638 | 50 mm/minute | Type 1-165 mm x 19 mm x 3.2 mm |
| Flexural properties | ASTM D 790 | 1.27 mm/minute | 127 mm x 12.7 mm x 3.2 mm |
| Notched Izod (NII) | ASTM D256 | 23°C or -30°C or -40°C pendulum energy 5 lb/ft | Bar-63.5 mm x 12.7 mm x 3.2 mm |
| Heat deflection temperature (HDT) | ASTM D648 | Unannealed, at 1.82 MPa | 127 mm x 12.7 mm x 3.2 mm |
| Melt flow rate (MFR) | ASTM D1238-04, Global test method | 300 °C, 1.2 kg, 6 min | Pellets |

Flammability tests were performed on samples at a thickness of 0.6, 1, 1.5, 2.5 or 3 mm in accordance with the Underwriter's Laboratory (UL) UL 94 standard. In some cases, a second set of 5 bars was tested to give an indication of the robustness of the rating. In this report the following definitions are used as shown in Table 5. Total flame-out times (FOT) for all bars (FOT = t1 + t2) were determined for 50W vertical burning test and V-ratings were obtained for every set of 5 bars. For 500W vertical burning test, final FOT was recorded after applying flame for 5 times and 5VB and 5VA ratings were determined.

Samples were tested after conditioning at 23°C, 50% relative humidity for more than 48 hours and aging at 70°C for 168 hours, respectively. The rating was determined based on both test results.

**Table 5. Flammability rating UL94 V**

| UL 94 Rating | t₁ and t₂ | 5-bar cumulative FOT | Burning drips igniting cotton |
|---|---|---|---|
| V-0 | ≤10s | ≤50s | No |
| V-1 | ≤30s | ≤250s | No |
| V-2 | ≤30s | ≤250s | Yes |
| NR (no rating) | >30s | >250s | |

**Table 6. Flammability rating UL94 5V**

| UL 94 Rating | t | Burning drips igniting cotton | Hole formation |
|---|---|---|---|
| 5VA | <60s | No | No |
| 5VB | <60s | No | Yes |

### Comparative Examples 1-7 (CEx1-CEx7) and Examples 1-5 (Ex1-Ex5)

Table 7 provides the compositions and properties for the following comparative examples and examples.

**Table 7.**

| Component | Unit | CEx1 | CEx 2 | CEx3 | CEx4 | CEx5 | CEx6 | CEx7 | Ex1 | Ex2 | Ex3 | Ex4 | Ex5 |
|---|---|---|---|---|---|---|---|---|---|---|---|---|---|
| PC-Si-1 | % | | 10 | 10 | 10 | 10 | | 12 | 12 | 12 | 12 | 12 | 12 |
| PC-Si -2 | % | | | | | | 24 | | | | | | |
| HBR-PC | % | 50 | | 5 | | | 50 | 50 | 50 | 50 | 50 | 50 | 50 |
| B-PC | % | 28 | 10.81 | 5.81 | 8.81 | 5.81 | 16.78 | | 16.78 | 16.28 | 15.28 | 15 | |
| PC-1 | % | 2 | | | | | | | | | | 8.31 | |
| PC-2 | % | 18.80 | | | | | | 8.28 | 12 | 12 | 12 | 8 | 7.28 |
| PCR-PC | % | | 75 | 75 | 75 | 75 | | | | | | | |
| PCR-BPC | % | | | | | | | 20 | | | | | 20 |
| MP-Si | % | 0.4 | | | | | | | | | | | |
| OPCT-Si | % | 0.1 | | | | | | | | | | | |
| Si-Fluid | % | | 0.5 | 0.5 | 0.5 | 0.5 | 0.5 | 1 | 0.5 | 1 | 2 | 1 | 2 |
| PFAS | % | 0.08 | | | | | | | | | | | |
| PPZ | % | | 3 | 3 | 5 | 8 | 5 | 5 | 5 | 5 | 5 | 5 | 5 |
| TiO₂ | % | | | | | | 3 | 3 | 3 | 3 | 3 | | 3 |
| AO-1 | % | 0.014 | 0.09 | 0.09 | 0.09 | 0.09 | 0.09 | 0.09 | 0.09 | 0.09 | 0.09 | 0.09 | 0.09 |
| AO-2 | % | 0.05 | | | | | | | | | | | |
| AO-3 | % | 0.017 | | | | | | | | | | | |
| PTS | % | 0.27 | 0.3 | 0.3 | 0.3 | 0.3 | 0.3 | 0.3 | 0.3 | 0.3 | 0.3 | 0.3 | 0.3 |
| BZT-1 | % | | 0.3 | 0.3 | 0.3 | 0.3 | 0.3 | 0.3 | 0.3 | 0.3 | 0.3 | 0.3 | 0.3 |
| BZT-2 | % | 0.27 | | | | | | | | | | | |
| PY | % | | | | | | 0.03 | 0.03 | 0.03 | 0.03 | 0.03 | | 0.03 |

| Properties | | | | | | | | | | | | | |
|---|---|---|---|---|---|---|---|---|---|---|---|---|---|
| MFR, 300°C, 1.2 kg | g/10 min | 5 | 9.4 | 10.7 | 11.7 | 16.3 | 6.5 | 7.9 | 5.9 | 6.5 | 5.9 | 6 | 7.1 |
| NII, 23°C | J/m | 100 | 876 | 850 | 869 | 899 | 841 | 804 | 783 | 775 | 788 | 855 | 806 |
| NII, -30°C | J/m | 85 | 695 | 653 | 714 | 649 | 687 | 661 | 768 | 668 | 694 | | 684 |
| NII, -40°C | J/m | | 649 | 604 | 627 | 549 | | 626 | 627 | 640 | 622 | 674 | 652 |

| Flame Retardance | | | | | | | | | | | | | |
|---|---|---|---|---|---|---|---|---|---|---|---|---|---|
| UL 94 Vx rating at 1.5 mm | | V-0 | V-0 | V-0 | V-0 | V-0 | V-0 | V-0 | V-0 | V-0 | V-0 | V-0 | V-0 |
| UL 94 Vx rating at 1.0 mm | | V-0 | V-1 | V-0 | V-0 | V-0 | | | | V-0 | V-0 | | |
| UL 94 Vx rating at 0.6 mm | | | V-2 | V-2 | V-1 | V-0 | | | | | | | |
| UL 94 5V bar at 3.0 mm | | Pass | Fail | Fail | Fail | Fail | Fail | Fail | Pass | Pass | Pass | Pass | Pass |
| UL 94 5V bar at 2.5 mm | | | Fail | Fail | Fail | Fail | | | | Pass | Pass | | |
| UL 94 5V Plaque at 3.0 mm | | Pass | Pass | Pass | Pass | Pass | Pass | Pass | Pass | Pass | Pass | Pass | Pass |

| Flexural Properties | | | | | | | | | | | | | |
|---|---|---|---|---|---|---|---|---|---|---|---|---|---|
| Flexural Modulus | MPa | 2400 | 2190 | 2230 | 2220 | 2250 | 2190 | 2150 | 2170 | 2140 | 2120 | 2180 | 2110 |
| Flexural stress at yield | MPa | 106 | 91.9 | 91.1 | 90.2 | 88.9 | 89.1 | 87.2 | 89 | 86.6 | 85.4 | 86.6 | 85.6 |
| HDT, 1.82 MPa, 3.2 mm | °C | 120 | 115 | 114 | 111 | 102 | 110 | 111 | 110 | 110 | 110 | 108 | 111 |

| Tensile properties | | | | | | | | | | | | | |
|---|---|---|---|---|---|---|---|---|---|---|---|---|---|
| Tensile Modulus | MPa | 2500 | 2149 | 2167 | 2164 | 2243 | 2389 | 2206 | 2352 | 2250 | 2219 | 2285 | 2178 |
| Tensile stress at yield | MPa | 68 | 56.6 | 56.6 | 56.1 | 55.9 | 59.2 | 56.9 | 58.6 | 56.9 | 56.3 | 58.6 | 56.5 |
| Tensile elongation at break | % | 51 | 85 | 90 | 98 | 105 | 63 | 60 | 47 | 44 | 31 | 82 | 36 |

Comparative example 1 (CEx1) achieved a 5V rating without having PTFE as an anti-dripping agent, but it still contains PFAS (Rimar salt) as a flame retardant. The impact performance of CEx1 was very poor even at room temperature. The UL94 V rating was improved with increased loading of the flame retardant phosphazene (CEx2-CEx5). Although the composition of CEx5 achieved a V-0 rating at 0.6 mm, it failed the 5V bar test at 3.0 mm, due to dripping with flame. CEx6 demonstrated that a composition similar to Ex1 (equivalent siloxane content in composition) but including a PC-siloxane copolymer with 20 wt% siloxane did not pass the 5V bar test at 3.0 mm.

As shown by CEx7 (PCR-BPC) and Ex5 (PCR-BPC), the type of post-consumer recycled (PCR) polycarbonate may have a small negative effect on the performance in 5V bar test, such that use of a higher loading (1-2%) of the silicone fluid including a dissolved silicone resin allows the sample to pass 5V bar test.

As shown by CEx6 and Ex1, PC-siloxane copolymer with 40 wt% siloxane has better anti-dripping performance than PC-siloxane copolymer with 20 wt% siloxane at the same overall siloxane content. Most examples comprise TiO₂ in the composition because TiO₂ has a remarkably negative effect on the anti-dripping performance in the absence of a PTFE-type anti-dripping agent. Accordingly, where the compositions containing TiO₂ pass 5V bar test, it is likely that other colors will also pass, as shown by Ex4. Finally, all of the examples Ex1-Ex5 showed very good low temperature ductility even at -30 or -40°C.

This disclosure further encompasses the following aspects.

Aspect 1. A polycarbonate composition including 10-50 wt% of a linear polycarbonate, a branched polycarbonate endcapped with p-cumyl phenol, or a combination thereof; 5-20 wt% of a polycarbonate-siloxane copolymer having a siloxane content of 30-70 wt%, present in an amount effective to provide 3-14 wt% siloxane repeating units based on the total weight of the composition; 40-60 wt% of a highly branched polycarbonate endcapped with 4-hydroxybenzonitrile; 0.5-15 wt% of a non-fluorinated phosphorus-containing flame retardant; 0.1-5 wt% of a silicone fluid having dissolved therein a silicone resin; optionally, a colorant composition optionally comprising 0.1-10 wt% of TiO₂; optionally, an additive composition; and optionally, 5-25 wt% of glass fibers; each based on the total weight of the polycarbonate composition, which totals 100 wt%; and wherein the polycarbonate composition comprises fluorinated compounds in an amount effective to provide 1500 ppm or less fluorine to the total composition; and wherein a molded sample of the polycarbonate composition has a UL-94 rating of 5VB or 5VA at a thickness of 3.0 millimeters or below, in particular a UL-94 rating of 5VB or 5VA at a thickness of 3.0 millimeters or 2.5 millimeters.

Aspect 2. The polycarbonate composition of aspect 1, comprising: 15-40 wt% of the linear polycarbonate, the branched polycarbonate, or a combination thereof; 10-15 wt% of the polycarbonate-siloxane copolymer; 45-55 wt% of the highly branched polycarbonate; 2-10 wt% of the non-fluorinated flame retardant comprising phosphorus; 0.5-3 wt% of the silicone fluid having dissolved therein a silicone resin; and optionally, a colorant composition optionally comprising 0.1-5 wt% of TiO₂; 0.5-10 wt% of the additive composition; and optionally, 5-20 wt% of glass fibers, each based on the total weight of the polycarbonate composition, which totals 100 wt%; wherein the polycarbonate composition comprises less than 1,000 ppm, or less than 500 ppm, or less than 100 ppm of fluorine.

Aspect 3. The polycarbonate composition of any one of the preceding aspects, wherein no fluorine is intentionally added; or an amount of fluorine present in the composition is below 20 ppm as determined in accordance with ASTM D7359-23; or both.

Aspect 4. The polycarbonate composition of any one of the preceding aspects, wherein the calculated added bromine and added chlorine content of the polycarbonate composition are each about 900 ppm or less and the calculated total added bromine, added chlorine, and added fluorine content of the polycarbonate composition is about 1500 ppm or less; or the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

Aspect 5. The polycarbonate composition of aspect 2, a sample of the polycarbonate composition has a UL-94 rating of 5VB at a thickness 2.5 millimeters.

Aspect 6. The polycarbonate composition of any one of the preceding aspects, wherein the linear polycarbonate is a virgin bisphenol A homopolycarbonate, a post-consumer recycled bisphenol A homopolycarbonate, or a combination thereof, and the branched homopolycarbonate is a virgin branched bisphenol A homopolycarbonate.

Aspect 7. The polycarbonate composition of any one of the preceding aspects, wherein the linear polycarbonate is not a recycled linear polycarbonate, preferably not a recycled linear bisphenol A homopolycarbonate.

Aspect 8. The polycarbonate composition of aspect 6 or 7, comprising the virgin linear bisphenol A homopolycarbonate and the virgin branched bisphenol A homopolycarbonate.

Aspect 9. The polycarbonate composition of any one of aspects 1-6, wherein the linear polycarbonate is present, and is a virgin bisphenol A homopolycarbonate, a post-consumer recycled bisphenol A homopolycarbonate, or a combination thereof; the branched homopolycarbonate is present, and is a post-consumer recycled bisphenol A homopolycarbonate; and the silicone fluid having dissolved therein a silicone resin is present in an amount of greater than 1-3.0 wt%.

Aspect 10. The polycarbonate composition of any one of the preceding aspects, wherein the poly(carbonate-siloxane) has a weight average molecular weight of 30,000-45,000 grams per mole, or 32,000-43,000 grams per mole, or 35,000-40,000 grams per mole, as determined by gel permeation chromatography using bisphenol A polycarbonate standards and calculated for polycarbonate.

Aspect 11. The polycarbonate composition of any one of the preceding aspects, wherein the silicone fluid is of the formula 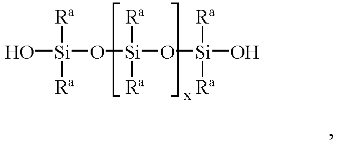 and the silicone resin comprises M and Q units of the formula 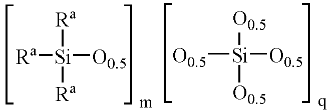 wherein each R^{a} is independently a C₁₋₆ alkyl, C₁₋₆ alkylene, C₆₋₁₂ aryl, optionally wherein up to 10% of the R^{a} groups can be hydrogen or hydroxide; x is an average number of the repeat units in the silicone fluid; and m and q are each respectively the average number of M repeat units and Q repeat units in the silicone resin.

Aspect 11. The polycarbonate composition of aspect 10, wherein each R^{a} is methyl in the silicone fluid and the silicone resin

Aspect 12. The polycarbonate composition of any one of the preceding aspects, comprising the colorant composition, preferably where the colorant composition is present and comprises titanium dioxide.

Aspect 13. A method of making the polycarbonate composition of any one of the preceding aspects, the method comprising melt-mixing the components of the composition, and, optionally, extruding the composition.

Aspect 14. An article comprising the polycarbonate composition of any of aspects 1-13.

Aspect 15. A method for forming the article of aspect 14, comprising molding, casting, or extruding the polycarbonate composition to provide the article.

The compositions, methods, and articles can alternatively include, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and can or cannot be present in other embodiments. In addition, it is to be understood that the described elements can be combined in any suitable manner in the various embodiments. A "combination thereof" is open and includes any combination including at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

## Claims

1. A polycarbonate composition comprising:
10-50 wt% of a linear polycarbonate, a branched polycarbonate endcapped with p-cumyl phenol, or a combination thereof;
5-20 wt% of a polycarbonate-siloxane copolymer having a siloxane content of 30-70 wt%, present in an amount effective to provide 3-14 wt% siloxane repeating units based on the total weight of the composition;
40-60 wt% of a highly branched polycarbonate endcapped with 4-hydroxybenzonitrile;
0.5-15 wt% of a non-fluorinated phosphorus-containing flame retardant;
0.1-5 wt% of a silicone fluid having dissolved therein a silicone resin;
optionally, a colorant composition optionally comprising 0.1-10 wt% of TiO₂;
optionally, an additive composition; and
optionally, 5-25 wt% of glass fibers;
each based on the total weight of the polycarbonate composition, which totals 100 wt%; and
wherein the polycarbonate composition comprises fluorinated compounds in an amount effective to provide 1500 ppm or less fluorine to the total composition; and
wherein a molded sample of the polycarbonate composition has a UL-94 rating of 5VB or 5VA at a thickness of 3.0 millimeters or below.

2. The polycarbonate composition of claim 1, comprising:
15-40 wt% of the linear polycarbonate, the branched polycarbonate, or a combination thereof;
10-15 wt% of the polycarbonate-siloxane copolymer;
45-55 wt% of the highly branched polycarbonate;
2-10 wt% of the non-fluorinated flame retardant comprising phosphorus;
0.5-3 wt% of the silicone fluid having dissolved therein a silicone resin; and
optionally, a colorant composition optionally comprising 0.1-5 wt% of TiO₂;
0.5-10 wt% of the additive composition; and
optionally, 5-20 wt% of glass fibers,
each based on the total weight of the polycarbonate composition, which totals 100 wt%,;
wherein the polycarbonate composition comprises less than 1,000 ppm, or less than 500 ppm, or less than 100 ppm of fluorine.

3. The polycarbonate composition of claim 1 or claim 2, wherein an amount of fluorine present in the composition is below 20 ppm as determined in accordance with ASTM D7359-23.

4. The polycarbonate composition of any of claims 1-3, wherein
the calculated added bromine and added chlorine content of the polycarbonate composition are each about 900 ppm or less and the calculated total added bromine, added chlorine, and added fluorine content of the polycarbonate composition is about 1500 ppm or less; or
the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

5. The polycarbonate composition of any claims 1-4, wherein a sample of the polycarbonate composition has a UL-94 rating of 5VB or 5VA at a thickness 2.5 millimeters or below.

6. The polycarbonate composition of any of claims 1-5, wherein the linear polycarbonate is a virgin bisphenol A homopolycarbonate, a post-consumer recycled bisphenol A homopolycarbonate, or a combination thereof, the branched homopolycarbonate is a virgin branched bisphenol A homopolycarbonate, and the highly branched polycarbonate is a virgin bisphenol A homopolycarbonate.

7. The polycarbonate composition of claim 6, wherein the linear polycarbonate is not a recycled linear polycarbonate.

8. The polycarbonate composition of claim 6 or claim 7, comprising the virgin linear bisphenol A homopolycarbonate and the virgin branched bisphenol A homopolycarbonate.

9. The polycarbonate composition of any of claims 1-6, wherein
the linear polycarbonate is present, and is a virgin bisphenol A homopolycarbonate, a post-consumer recycled bisphenol A homopolycarbonate, or a combination thereof;
the branched homopolycarbonate is present, and is a post-consumer recycled bisphenol A homopolycarbonate; and
the silicone fluid having dissolved therein a silicone resin is present in an amount of greater than 1-3.0 wt%.

10. The polycarbonate composition of any of claims 1-9, wherein the silicone fluid is of the formula 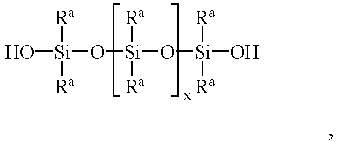 and the silicone resin comprises M and Q units of the formula 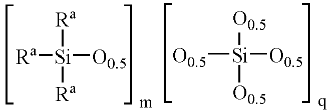 wherein
each R^{a} is independently a C₁₋₆ alkyl, C₁₋₆ alkylene, C₆₋₁₂ aryl, optionally wherein up to 10% of the R^{a} groups can be hydrogen or hydroxide;
x is an average number of the repeat units in the silicone fluid; and
m and q are each respectively the average number of M repeat units and Q repeat units in the silicone resin.

11. The polycarbonate composition of claim 10, wherein each R^{a} is methyl in the silicone fluid and the silicone resin.

12. The polycarbonate composition of any of claims 1-11, comprising the colorant composition, preferably where the colorant composition comprises titanium dioxide.

13. A method of making the polycarbonate composition of any of claims 1-12, the method comprising melt-mixing the components of the composition, and, optionally, extruding the composition.

14. An article comprising the polycarbonate composition of any of claims 1-13.

15. A method for forming the article of claim 14, comprising molding, casting, or extruding the polycarbonate composition to provide the article.
